# EUROPEAN PATENT APPLICATION

(11) **EP 2 869 441 A1**
(43) Date of publication of application: **06.05.2015**
(21) Application number: 12879901.2
(22) Date of filing: 28.06.2012
(51) Int. Cl.: H02K 16/00

(54) **COAXIAL WIND TURBINE, MOTOR, AND VENTILATION SYSTEM**

(71) Applicant: Wang, Yuchi, Hsinchu City, Taiwan (TW); Chia, Kuo-Lin, Hsinchu City (CN)
(72) Inventor: Wang, Yuchi, Hsinchu City, Taiwan (TW); Chia, Kuo-Lin, Hsinchu City (CN)
(74) Representative: Kindermann, Peter
(86) International application number: PCT/CN2012/077680
(87) International publication number: WO 2014/000196

(57) **Abstract**

The present invention relates to a power generator. The power generator includes a first rotation structure including a first electromagnetic induction element, a second rotation structure including a second electromagnetic induction element, and a hydraulic steering pump system enabling a rotation speed of the first rotation structure to be consistent with a rotation speed of the second rotation structure. The first rotation structure and the second rotation structure are configured coaxially. Based on the configuration in the present disclosure, compared with traditional power generators, the power generator in the present disclosure can achieve about twice the power generation efficiency with a simplified structure without increasing the volume of the power generator. In addition, the power generator can be applied to the dual-coaxial reverse motors for a ship's podded propulsor or ventilation system.

## Description

### FIELD OF THE INVENTION

The present invention relates to a windpower generator and a motor, particularly to a coaxial windpower generator and a dual-coaxial reverse podded propulsion motor, which have a main difference from a traditional windpower generator and motor because two armature rotors are configured coaxially and rotate in reverse directions to increase the efficiency of electricity generation. A dual-coaxial reverse podded propulsion motor does not need a shipping space for a propeller shaft, and can adjust the power supply of a parallel power generator set to save fuel consumption. In addition, the present invention can be used in ventilation systems.

### BACKGROUND OF THE INVENTION

The traditional industrial windpower generator works using blades on one side in combination with a single armature rotor shaft, which has limited electricity generation efficiency. If it is desired to use a multi-shaft structure in a power generator to increase the generated power, there will be difficulty in the design and the overall size of the generator will increase correspondingly. In view of the limited volume, a power generator can generate limited power by rotation of a single armature rotor cooperating with a stator. With regard to energy generation, e.g. from wind or water and so on, the efficiency is limited when using only one armature rotor cooperating with a stator.

An industrial windpower generator generally uses blades on one side to drive an armature rotor. The structure of the power generator should be changed greatly to increase the electricity generation efficiency. It is hard to make a substantial increase in the generated power with only simple modifications of the structure. That is, the traditional production technology cannot achieve large-scale electricity production. Furthermore, it is desirable to simplify the structure of the power generator to reduce cost of future repairs and maintenance, so as to prolong the service life.

In addition, a motor for a podded propulsor used in military applications and the shipping industry is operated by using blades on one side or both sides of a single armature rotor shaft. However, the propulsive efficiency generated by the cooperation of a single armature rotor and a stator of a motor for a podded propulsor is limited. If a deviator is configured in the motor for a podded propulsor including a single armature rotor, the increased interior space and weight will be disadvantageous for future repairs and maintenance.

Based on the above, it is desirable to provide a power generator or a podded propulsion motor with increased electricity generation efficiency and a simplified structure for easy and convenient repair and maintenance.

### SUMMARY OF THE INVENTION

One aspect of the present disclosure is to disclose a power generator with increased power-generation efficiency, a simplified design in the structure for easy and convenient maintenance. In accordance with the aspect of the present disclosure, a power generator is disclosed. The power generator includes a first rotation structure including a first electromagnetic induction element, a second rotation structure including a second electromagnetic induction element, and a hydraulic steering pump system enabling a rotation speed of the first rotation structure to be consistent with a rotation speed of the second rotation structure. The first rotation structure and the second rotation structure are configured coaxially.

In accordance with another aspect of the present disclosure, another power generator is disclosed. The power generator comprises a rotor having a rotation direction and a stator rotating in a direction reverse to the rotation direction.

In accordance with another aspect of the present disclosure, a motor, specifically a dual-coaxial reverse podded propulsion motor for ships is disclosed. In addition, the power generator in the present disclosure can be used in a ventilation system.

### BRIEF DESCRIPTION OF THE DRAWINGS

Fig. 1 is a diagram showing a coaxial windpower generator in combination with a hydraulic system in accordance with the present invention.
Fig. 2 is a side sectional diagram showing a coaxial windpower generator.
Fig. 3 is a side sectional diagram showing a dual-coaxial reverse motor for a podded propulsor.

### DETAILED DESCRIPTION OF THE PREFERRED EMBODIMENT

The present invention will now be described more specifically with reference to the following Embodiments. It is to be noted that the following descriptions of preferred Embodiments of this invention are presented herein for purpose of illustration and description only; they is not intended to be exhaustive or to be limited to the precise form disclosed. The same elements in the following embodiments are denoted using the same reference numerals.

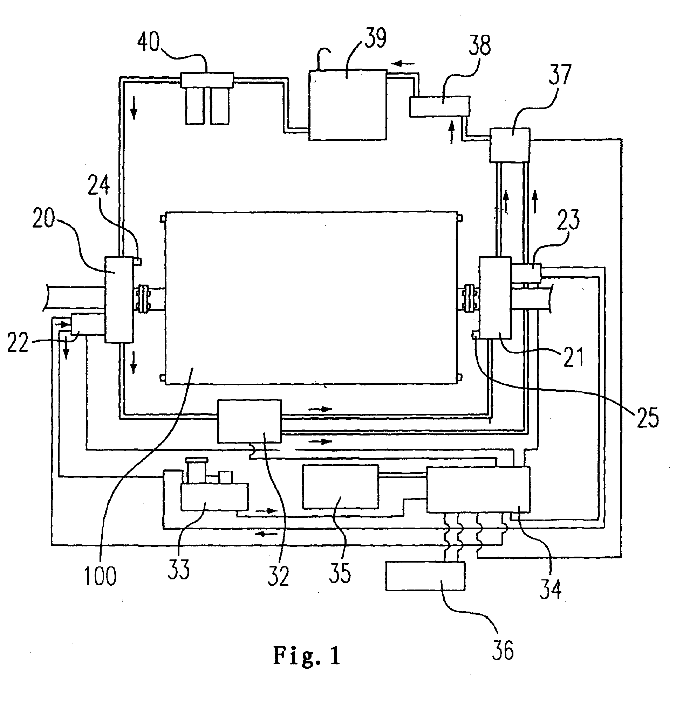

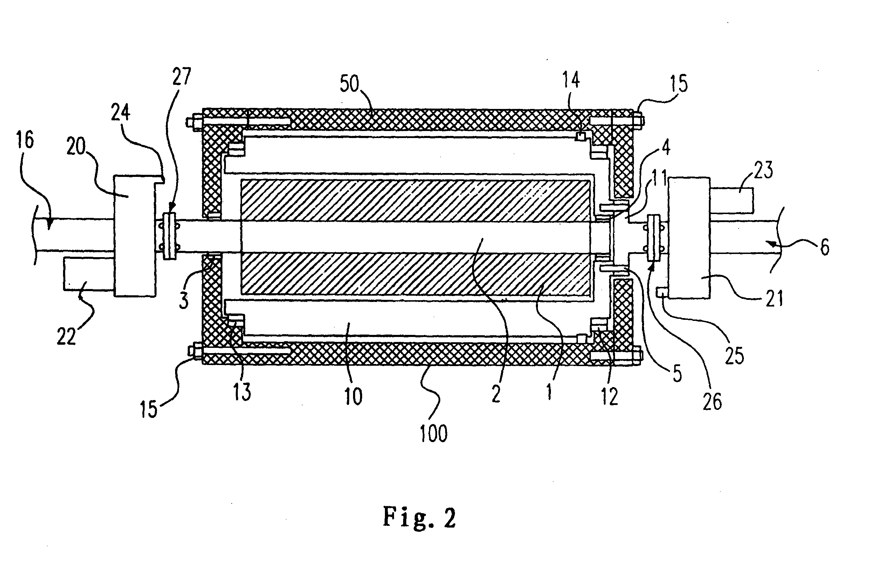

Fig. 1 is a diagram showing a coaxial windpower generator in combination with a hydraulic system according to the present invention. Fig. 2 is a side sectional diagram of a coaxial windpower generator. To illustrate the structure and the working mechanism of the coaxial windpower generator, please refer to Fig. 1 as well as Fig. 2.

The power generator 100 includes a first armature rotor 1, a first armature rotor shaft 2, a coil bobbin 10 for a second armature rotor, a second armature rotor shaft 11 and a power generator casing 50, which performs either coaxial operation of the first armature rotor shaft 2 and the second armature rotor shaft 11 or the single axial operation of the first armature rotor shaft 2 in conjunction with the hydraulic system. A fixing screw 15 fixes the power generator casing 50 on the power generator 100. The first armature rotor 1 includes the first armature rotor shaft 2 connected to the first armature rotor bearing 3 and the first armature rotor bearing 4 to constitute the main operation system. The first armature rotor bearings 3 and 4 are fixed in the bearing housings in the power generator casing 50. The second armature rotor composed of the coil bobbin 10 and the second armature rotor shaft 11 is fixed to the axis center of the coil bobbin 10 by three or more screws (e.g. the connection screw 5 of the first armature rotor shaft 2). A coil bobbin bearing 12 and a coil bobbin bearing 13 are connected with two ends of the coil bobbin 10 and fixed in the bearing housings in the power generator casing 50. The first armature rotor shaft 2 is connected to a first armature rotor shaft brake 22 through a first armature rotor shaft coupler 27. The second armature rotor shaft 11 is connected to a second armature rotor shaft brake 23 through a second armature rotor shaft coupler 26. Accordingly, the first armature rotor shaft 2 and the second armature rotor shaft 11 are on the same axis line. Structurally, the first armature rotor 1 may be a permanent magnet or an electromagnet, and coil of the coil bobbin 10 may be a metal coil (or called a "winding") or a permanent magnet.

Initially, in order to allow the first armature rotor shaft 2 and the second armature rotor shaft 11 to run in inverse directions, or allow the first armature rotor shaft 2 to run independently from the operation of the second armature rotor shaft 11, a hydraulic system auxiliary pump 33 is automatically controlled and activated to establish hydraulic pressure for the control system. When a electronic signal controller 35 of the power generator operating system receives operating signals, the electromagnetic hydraulic system-operated valve assembly 34 releases the first armature rotor shaft brake 22 and the second armature rotor shaft brake 23 from their braking positions, which permits free rotation of the first armature rotor shaft 2 in either a clockwise or counterclockwise direction and rotation of the second armature rotor shaft 11 in a reverse direction correspondingly. At this moment, the first armature rotor shaft 2 uses the kinetic energy from wind blades to actuate a hydraulic gear pump 20 connected with the first armature rotor shaft 2, which outputs hydraulic oil into a hydraulic gear motor 21 connected to the second armature rotor shaft 11 through a first hydraulic control valve 32 connected to the hydraulic gear motor 21 to drive the coil bobbin 10. Subsequently, the hydraulic oil is output into a hydraulic oil cooler 38 through a second hydraulic control valve 37 connected to the hydraulic gear motor 21. During the operation, electric current generated from the electromagnetic induction by the coil bobbin 10 is output to the relevant electrical equipment via a conductive carbon brush 14.

If the coil bobbin bearing 12 or the coil bobbin bearing 13 fails, the hydraulic system auxiliary pump 33 is activated to establish the hydraulic pressure for the control system. When the electronic signal controller 35 of the power generator operating system receives operating signals, the electromagnetic hydraulic system-operated valve assembly 34 releases the brake status of the first armature rotor shaft brake 22 to permit free rotation of the first armature rotor shaft 2, and holds the second armature rotor shaft brake 23 in the braking position to brake the second armature rotor shaft 11. Accordingly, the first armature rotor shaft 2 drives the hydraulic gear pump 20 to output the hydraulic oil into the first hydraulic control valve 32 and bypass to the second hydraulic control valve 37 and subsequently the hydraulic oil cooler 38. The electric current generated from the electromagnetic induction by the coil bobbin 10 is output to the relevant electrical equipment via the conductive carbon brush 14. When intending to stop the operation of the power generator, the electronic signal controller 35 of the power generator operating system controls the electromagnetic hydraulic system-operated valve assembly 34 to allow the hydraulic gear pump 20 to output hydraulic pressure to the first hydraulic control valve 32 and subsequently bypasses to the second hydraulic control valve 37 and the hydraulic oil cooler 38. When the second armature rotor shaft 11 has stopped, signals generated by a second rotation speed signal generator 25 connected with the second armature rotor shaft 11 are detected by the electronic signal controller 35 of the power generator operating system to control the electromagnetic hydraulic system-operated valve assembly 34. As a result, the second armature rotor shaft brake 23 keeps the second armature rotor shaft 11 in the braking position, and subsequently the first armature rotor shaft brake 22 stops the rotation of the first armature rotor shaft 2. When signals generated from a first rotation speed signal generator 24 connected to the first armature rotor shaft are detected by the electronic signal controller 35, the first armature rotor shaft brake 22 is controlled by the electronic signal controller 35 to stop the operation of the power generator.

In addition, if the hydraulic gear pump 20 is replaced with a variable stroke pump, the rotation speed of the first armature rotor 2 can be adjusted to be consistent with that of the second armature rotor. In this way, there will be a larger variability in the shaft speed of the pump.

In addition, the hydraulic oil in the hydraulic oil cooler 38 can be collected into a hydraulic oil storage tank 39 for temporary storage, and be recycled for use after being filtered by a hydraulic oil filter 40. A hydraulic steering system 36 is connected to the electromagnetic hydraulic system-operated valve assembly 34 to control the directions of the hydraulic pressure of the power generator.

In addition, the foregoing power generator can be designed as a dual-coaxial reverse motor for ship's podded propulsors. The diagrams of the motor in combination with the hydraulic system are similar to Figs. 1 and 2, and thus the same parts are not redundantly repeated here. In Figs. 1 and 2, the elements related to a power generator can be replaced with elements related to a motor by one skilled in the art. For example, the hydraulic steering system 36 for a power generator can be replaced with a hydraulic steering system for a motor.

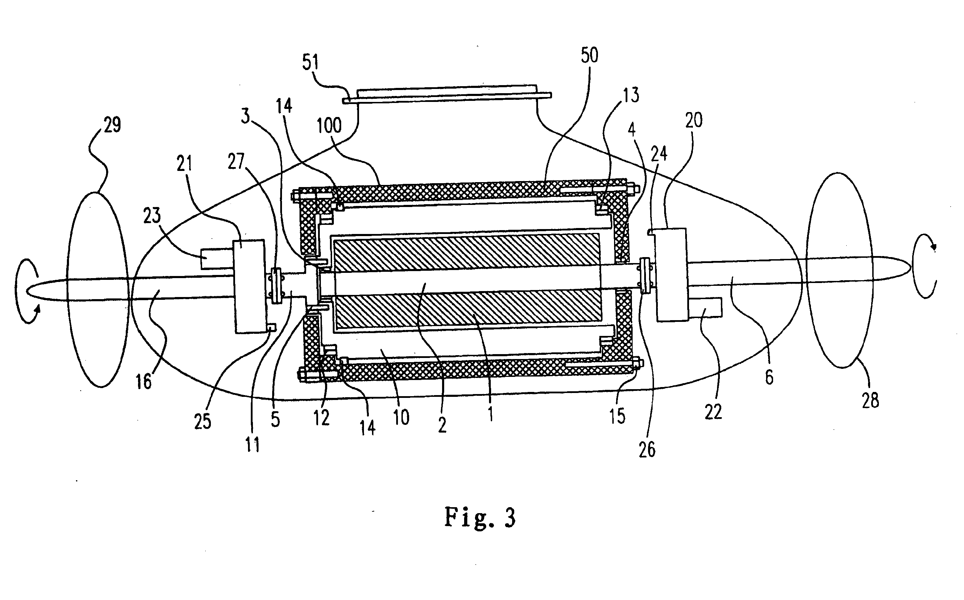

Please refer to Fig. 3, which is a side sectional diagram of a dual-coaxial reverse motor for podded propulsors according to the present disclosure. The technical differences between the motor and the power generator are illustrated below with reference to Figs. 1 and 3, and the same technical features thereof are not repeated.

Structurally, a coil bobbin 10 in a motor includes coil bobbin bearings 12 and 13, which are fixed in the bearing housing of the motor casing 50.

When the motor initially works, the hydraulic system auxiliary pump 33 is activated to establish hydraulic pressure for the control system. When the electronic signal controller 35 of the motor operating system receives operating signals, the operating system of the dual-coaxial reverse motor controls the power input from the conductive carbon brush 14, and the electromagnetic hydraulic system-operated valve assembly 34 releases the first armature rotor shaft brake 22 and the second armature rotor shaft brake 23 from their individual braking positions. An electric current flows from the conductive carbon brush 14 to the winding of the coil bobbin 10 to generate a electromagnetic field, which inducts a rotation of the first armature rotor 1 and thus the rotation of the first armature rotor shaft 2 in a clockwise or counterclockwise direction. The rotation of the first armature rotor shaft 2 drives a first driving shaft 6 and a first blade 28 connected to the first armature rotor shaft 2, and therefore the second armature rotor shaft 11 rotates in a counterclockwise or clockwise direction correspondingly. At the same time, the first armature rotor shaft 2 drives the hydraulic gear pump 20 to output hydraulic oil to the first hydraulic control valve 32 and then to a hydraulic gear motor 21 connected to the second armature rotor shaft 11, so as to rotate the coil bobbin 10, a second driving shaft 16 and a second blade 29 by the rotation of the second armature rotor shaft 11. The hydraulic oil is output to the hydraulic oil cooler 38 through the second hydraulic control valve 37. In this way, the first armature rotor shaft 2 and the second armature rotor shaft 11 rotate in reverse directions.

If the coil bobbin bearing 12 or the coil bobbin bearing 13 fails, the hydraulic system auxiliary pump 33 is activated to establish the hydraulic pressure for the control system. When the electronic signal controller 35 of the motor receives operating signals, the electromagnetic hydraulic system-operated valve assembly 34 releases the first armature rotor shaft brake 22 from its braking position to permit free rotation of the first armature rotor shaft 2, and maintains the second armature rotor shaft brake 23 in the braking position to brake the second armature rotor shaft 11. The operating system of the dual-coaxial reverse motor controls the power supply. The electric current flows from the conductive carbon brush 14 to the coil bobbin 10, and thereby an electromagnetic field is generated. The electromagnetic field induces the first armature rotor 1 to drive the hydraulic gear pump 20 connected with the first armature rotor shaft 2. The hydraulic pressure is output from the hydraulic gear pump 20 into the first hydraulic control valve 32, bypasses the hydraulic gear motor to the second hydraulic control valve 37 and subsequently the hydraulic oil cooler 38.

When intending to stop all operations of the motor, the operating system of the dual-coaxial reverse motor for podded propulsors can turn off the power supply, and the electronic signal controller 35 controls the electromagnetic hydraulic system-operated valve assembly 34 to allow the hydraulic gear pump 20 to output hydraulic pressure to the first hydraulic control valve 32 and subsequently to the second hydraulic control valve 37 and the hydraulic oil cooler 38. The first armature rotor shaft 2 and the second armature rotor shaft 11 are ready to perform the next operations. Alternatively, when the second armature rotor shaft 11 stops, the signals from the second rotation speed signal generator 25 connected with the second armature rotor shaft 11 are detected by the electronic signal controller 35 of the motor operating system, and thus the electromagnetic hydraulic system-operated valve assembly 34 is controlled correspondingly. As a result, the second armature rotor shaft brake 23 keeps the second armature rotor shaft 11 in its braking position, and subsequently the first armature rotor shaft brake 22 stops the rotation of the first armature rotor shaft 2. When the first armature rotor shaft 2 stops, signals are generated by the first rotation speed signal generator 24 and detected by the electronic signal controller 35, and thereby the electronic signal controller 35 controls the first armature rotor shaft brake 22 to stop the operations of the motor.

In the emergent situations, the operating system of the dual-coaxial reverse podded propulsor motor can turn off the power supply, and the electronic signal controller 35 may control the electromagnetic hydraulic system-operated valve assembly 34 to cause the hydraulic gear pump 20 to output hydraulic pressure to the first hydraulic control valve 32 and subsequently bypasses to the second hydraulic control valve 37 and the hydraulic oil cooler 38. At the same time, the electronic signal controller 35 controls the electromagnetic hydraulic system-operated valve assembly 34 to brake the first armature rotor shaft brake 22 and the second armature rotor shaft brake 23 to keep the first armature rotor shaft 2 and the second armature rotor shaft 11 in their braking positions.

When the hydraulic gear pump 20 is replaced with a variable stroke pump, the rotation speed of the first armature rotor 2 can be adjusted to be consistent with that of the second armature rotor. In this way, there will be advantageous elasticity in the shaft speeds of the pump.

A motor frame hydraulic steering system 36 is connected to the electromagnetic hydraulic system-operated valve assembly 34 to control the operating directions of the podded propulsor frame of the motor, and thereby the moving directions can be changed without traditional rudders.

In addition, the podded propulsor frame can be the casing 50 of the motor to simplify the structure of the motor.

Furthermore, the power generators of the present invention can be applied to various ventilation systems.

While the disclosures here describe the terms of what is presently considered to be the most practical and preferred embodiments, it is to be understood that the disclosure needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

Based on the embodiments above, the present invention at least generates effects as follows.

(1) Under the same level of the power supplied from the power supply source, assuming two armature rotor shafts 2 and 11 run individually at a rate of 300 RPM in opposite directions, the sum of the rotation speeds will reach 600 RPM. Therefore, compared with the traditional power generator (or motor), the power generator (or motor) according to the present disclosure has higher electrical efficiency.

(2) Before the coaxial windpower generator (or the dual-coaxial reverse podded propulsor motor) is activated, the hydraulic system auxiliary pump 33 supplies hydraulic oil to drive the first armature rotor shaft 2 and the second armature rotor shaft 11, so as to reduce the wear and tear on their bearings.

(3) The coaxial windpower generator or motor according to the present disclosure can provide power generated by the armature rotor 1 alone. That is, when the coil bobbin bearings 12 and 13 and the hydraulic gear motor 21 fail, the power generator according to the present disclosure can still function for power generation.

(4) The first armature rotor shaft 2 and the coil bobbin 10 of the power generator or motor in the present invention are set coaxially and turn in opposite directions. In addition, their activation and brake are controlled by a hydraulic system. This design avoids large-scale changes in the structure and increased volume of the power generator.

### Embodiments

1. A power generator, comprising a first rotation structure including a first electromagnetic induction element, a second rotation structure including a second electromagnetic induction element, and a hydraulic pump operated to adjust a rotation speed of the first rotation structure to be consistent with a rotation speed of the second rotation structure. The first rotation structure and the second rotation structure are configured coaxially;

2. The power generator of Embodiment 1, wherein the first rotation structure rotates in a first rotation direction, the second rotation structure rotates in a second rotation direction different from the first rotation direction, and when the first rotation direction is a clockwise direction or a counterclockwise direction, the second rotation direction is the counterclockwise direction or the clockwise direction correspondingly.

3. The power generator of Embodiment 1, wherein the first electromagnetic induction element is a first winding or a first permanent magnet, and the second electromagnetic induction element is a second winding or a second permanent magnet.

4. The power generator of Embodiment 1, wherein the first rotation structure and the second rotation structure rotate at different rotation speeds, and the first rotation structure rotates independently of the second rotation structure.

5. The power generator of Embodiment 4, further comprising a first rotation structure brake braking the first rotation structure, and a second rotation structure brake braking the second rotation structure.

6. The power generator of Embodiment 5, further comprising an electromagnetic hydraulic-operated valve assembly including an electronic signal controller. The first rotation structure includes a first signal generator, the second rotation structure includes a second signal generator, and when the electronic signal controller receives initiating signals from the first signal generator or the second signal generator, the hydraulic pump establishes a hydraulic pressure to release the first rotation structure brake from a first braking position to drive the first rotation structure, or release the second rotation structure brake from a second braking position to drive the second rotation structure.

7. The power generator of Embodiment 6, wherein when the first rotation structure or the second rotation structure achieves an autorotation speed, a stop signal is transmitted from the first signal generator or the second signal generator to the electronic signal controller, and then the electromagnetic hydraulic-operated valve assembly removes the hydraulic pressure supplied to the first rotation structure brake or the second rotation structure brake, to stop an operation of the hydraulic pump.

8. The power generator of Embodiment 1, further comprising a first hydraulic gear motor to drive the first rotation structure, and a second hydraulic gear motor to drive the second rotation structure.

9. The power generator of Embodiment 1, further comprising a variable-displacement pump discharging a hydraulic oil, wherein the rotation speed of the second rotation structure is adjusted according to a flow rate of the hydraulic oil.

10. A power generator, comprising a rotor and a rotating stator rotating in a direction opposite to a rotation direction of the rotor.

11. A motor comprising a first rotation structure including a first electromagnetic induction element, a second rotation structure including a second electromagnetic induction element, and a hydraulic pump operated to adjust a rotation speed of the first rotation structure to be consistent with a rotation speed of the second rotation structure. The first rotation structure and the second rotation structure are configured coaxially.

12. The motor of Embodiment 11, wherein the motor is a dual-coaxial reverse podded propulsor motor for ships.

13. A use of the power generator of Embodiment 1 in a ventilation system.

## Claims

1. A power generator, comprising:
a first rotation structure including a first electromagnetic induction element;
a second rotation structure including a second electromagnetic induction element, wherein the first rotation structure and the second rotation structure are configured coaxially; and
a hydraulic pump operated to adjust a rotation speed of the first rotation structure to be consistent with a rotation speed of the second rotation structure.

2. The power generator of Claim 1, wherein the first rotation structure rotates in a first rotation direction, the second rotation structure rotates in a second rotation direction different from the first rotation direction, and when the first rotation direction is a clockwise direction or a counterclockwise direction, the second rotation direction is the counterclockwise direction or the clockwise direction correspondingly.

3. The power generator of Claim 1, wherein the first electromagnetic induction element is a first winding or a first permanent magnet, and the second electromagnetic induction element is a second winding or a second permanent magnet.

4. The power generator of Claim 1, wherein the first rotation structure and the second rotation structure rotate at different rotation speeds, and the first rotation structure rotates independently of the second rotation structure.

5. The power generator of Claim 4, further comprising:
a first rotation structure brake braking the first rotation structure; and
a second rotation structure brake braking the second rotation structure.

6. The power generator of Claim 5, further comprising:
an electromagnetic hydraulic-operated valve assembly including an electronic signal controller,
wherein the first rotation structure includes a first signal generator, the second rotation structure includes a second signal generator, and when the electronic signal controller receives initiating signals from the first signal generator or the second signal generator, the hydraulic pump establishes a hydraulic pressure to release the first rotation structure brake from a first braking position to drive the first rotation structure, or release the second rotation structure brake from a second braking position to drive the second rotation structure.

7. The power generator of Claim 6, wherein when the first rotation structure or the second rotation structure achieves an autorotation speed, a stop signal is transmitted from the first signal generator or the second signal generator to the electronic signal controller, and then the electromagnetic hydraulic-operated valve assembly removes the hydraulic pressure supplied to the first rotation structure brake or the second rotation structure brake, to stop an operation of the hydraulic pump.

8. The power generator of Claim 1, further comprising:
a first hydraulic gear motor to drive the first rotation structure,; and
a second hydraulic gear motor to drive the second rotation structure.

9. The power generator of Claim 1, further comprising:
a variable-displacement pump discharging a hydraulic oil, wherein the rotation speed of the second rotation structure is adjusted according to a flow rate of the hydraulic oil.

10. A power generator, comprising:
a rotor; and
a rotating stator rotating in a direction opposite to a rotation direction of the rotor.

11. A motor, comprising:
a first rotation structure including a first electromagnetic induction element;
a second rotation structure including a second electromagnetic induction element, wherein the first rotation structure and the second rotation structure are configured coaxially; and
a hydraulic pump operated to adjust a rotation speed of the first rotation structure to be consistent with a rotation speed of the second rotation structure.

12. The motor of Claim 11, wherein the motor is a dual-coaxial reverse podded propulsor motor for ships.

13. A use of the power generator of Claim 1 in a ventilation system.
